(19) Europäisches Patentamt
European Patent Office
Office européen des brevets

(11) **EP 2 143 353 B1**

(12) **EUROPEAN PATENT SPECIFICATION**

(45) Date of publication and mention
of the grant of the patent:
**02.09.2015 Bulletin 2015/36**

(51) Int Cl.:
***A43B 13/04*** *(2006.01)*    ***C08L 23/12*** *(2006.01)*
***C08L 53/02*** *(2006.01)*

(21) Application number: **07744130.1**

(22) Date of filing: **25.05.2007**

(86) International application number:
**PCT/JP2007/060696**

(87) International publication number:
**WO 2008/146342 (04.12.2008 Gazette 2008/49)**

(54) **OUTER SOLES AND SHOES**

AUSSENSOHLEN UND SCHUHE

SEMELLES EXTERNES ET CHAUSSURES

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**13.01.2010 Bulletin 2010/02**

(73) Proprietor: **ASICS Corporation
Kobe-shi
Hyogo 6508555 (JP)**

(72) Inventors:
• **IMAZATO, Katsuhiro
Kobe-shi
Hyogo 650-8555 (JP)**
• **MORI, Sadaki
Kobe-shi
Hyogo 650-8555 (JP)**

(74) Representative: **Grünecker Patent- und
Rechtsanwälte
PartG mbB
Leopoldstraße 4
80802 München (DE)**

(56) References cited:
**WO-A1-2006/121069      JP-A- 04 307 002
JP-A- 11 253 201          JP-A- 2003 041 060
JP-A- 2005 060 552       US-A- 4 904 725
US-A1- 2005 038 131**

• **DATABASE WPI Week 200437 Thomson
Scientific, London, GB; AN 2004-400143
XP002725543, & WO 2004/039858 A1 (KAO CORP)
13 May 2004 (2004-05-13)**
• **DATABASE WPI Week 200109 Thomson
Scientific, London, GB; AN 2001-074619
XP002725544, & JP 2000 290331 A (KANEKA
CORP) 17 October 2000 (2000-10-17)**

**Description**

TECHNICAL FIELD

The present invention relates to an outer sole of shoes and shoes.

BACKGROUND ART

An outer sole in shoes of various kinds such as sports shoes is a bottom member contacting with the ground. The outer sole is requested to be resistant to abrasion (abrasion resistance) and light in weight.

Patent Document 1 (Japanese Unexamined Patent Publication No. 11-266905) describes an outer sole into which a light-weight foam with a specific gravity of 0.8 or less and a high-strength nonfoam are butted and integrally joined. It is described in Patent Document 1 that such an outer sole is excellent in abrasion resistance and light in weight for the reason that a high-strength nonfoam is arranged in a region requiring abrasion resistance and a light-weight foam is arranged in the other region.

Patent Document 2 (Japanese Unexamined Patent Publication No. 2007-29320) discloses an outer sole having a laminated part such that a grounding layer with a Shore A hardness of 55 to 95 and a specific gravity of 1.00 to 1.23 and a non-grounding layer with a specific gravity of 0.90 to 1.13 are laminated, in which the laminated part is composed of a polymer composition including no air bubble. It is described in Patent Document 2 that such an outer sole is excellent in abrasion resistance and light in weight by reason of being a double structure such that a grounding layer favorable in abrasion resistance and a non-grounding layer small in specific gravity are laminated.

(Patent Document 1) Japanese Unexamined Patent Publication No. 11-266905
(Patent Document 2) Japanese Unexamined Patent Publication No. 2007-29320

DISCLOSURE OF THE INVENTION

However, the outer sole of Patent Document 1 is inferior in abrasion resistance in a region with a foam arranged by reason of using a foam. The lightweight foam and the high-strength nonfoam need to be butted and joined so as not to be peeled.

On the other hand, with regard to the outer sole of Patent Document 2, the grounding layer has a Shore A hardness of 55 to 95. However, sufficient abrasion resistance of the grounding layer is not obtained only by comparatively increasing the hardness of the grounding layer and the grounding layer is requested to be improved. The outer sole is requested to be further reduced in weight for the reason that the grounding layer has a specific gravity of 1.00 to 1.23.

An object of the present invention is to provide an outer sole light in weight and excellent in abrasion resistance, and shoes provided with the outer sole.

Generally, materials comparatively small in specific gravities are excellent in weight reduction but inferior in abrasion resistance, while materials excellent in abrasion resistance tend to be comparatively large in specific gravities.

In order to obtain an outer sole satisfying such contrary characteristics, the inventors of the present invention have noted the abrasion mechanism of an outer sole through earnest studies.

The studies of the inventors of the present invention have revealed that the abrasion of an outer sole is caused through the following stages 1 to 5.

Stage 1: when an outer sole contacts with the ground, the front face of the outer sole contacts with pebbles and sand. In other words, when an outer sole contacts with the ground, external force is applied on the front face of the outer sole.

Stage 2: external force is applied on the front face of the outer sole, so that the front face is deformed.

Stage 3: external force is ordinarily applied on the outer sole, so that a flaw is caused on the front face of the outer sole.

Stage 4: the above-mentioned flaw is caused, so that a small lump is caused on the front face of the outer sole (a part of forming materials for the outer sole in a portion where the flaw is caused becomes a small lump). In addition, external force is applied, so that the above-mentioned small lump grows large.

Stage 5: the above-mentioned lump grows large and then falls off the front face of the outer sole to become abrasion powder. Thus, a part of forming materials for the outer sole falls off, so that the outer sole is abraded.

Noting the abrasion mechanism as described above, the inventors of the present invention have found out that the abrasion of the outer sole may be decreased for the reason that (1) when external force is applied on the outer sole, a flaw is hardly caused on the front face of the outer sole, and (2) even though the above-mentioned flaw is caused and a lump is caused, the lump hardly falls off the front face of the outer sole.

The present invention is an outer sole being disposed on the bottom face of shoes. The outer sole is formed out of a polymer composition with a specific gravity of 0.95 or less which contains an olefin resin and a styrene elastomer, wherein a storage elastic modulus [E'] and a loss coefficient [tan$\delta$] of the outer sole in a dynamic viscoelasticity measurement (20±3°C, 10 Hz) are 100 MPa to 500 MPa and 0.2 or less respectively, and a maximum tensile stress of the outer sole is 30 MPa or more.

Here, the storage elastic modulus [E'] and the loss coefficient [tan$\delta$] are numerical values measured by dynamic viscoelasticity measurement, and a smaller storage elastic modulus allows shock to be absorbed more easily and a smaller loss coefficient allows easier restoration to the original shape after deformation.

An outer sole of the present invention is light in weight by reason of being formed out of a polymer composition with a specific gravity of 0.95 or less.

The above-mentioned outer sole has a storage elastic modulus of 100 MPa to 500 MPa, so that shock thereof is easily absorbed when external force is applied. In addition, the above-mentioned outer sole is easily restored to the original shape after being deformed by external force by reason of having a loss coefficient of 0.2 or less. Accordingly, the outer sole of the present invention may further decrease the occurrence of a flaw.

In addition, the above-mentioned outer sole hardly causes rupture by reason of having a maximum tensile stress of 30 MPa or more. Accordingly, the outer sole of the present invention hardly causes a lump during using to fall off.

Thus, the outer sole of the present invention is excellent in abrasion resistance by reason of being capable of restraining a flaw from occurring and restraining a lump from falling off.

As the preferable outer sole of the present invention, the olefin resin and the styrene elastomer are blended by 40 parts by mass to 60 parts by mass and 40 parts by mass to 60 parts by mass respectively with respect to 100 parts by mass of a total amount of the olefin resin and the styrene elastomer.

As the other preferable outer sole of the present invention, the olefin resin contains a mixture of an ethylene polymer and a propylene polymer.

As the other preferable outer sole of the present invention, the blending ratio (mass ratio) of the ethylene polymer and the propylene polymer is 1:5 to 4:1.

As the other preferable outer sole of the present invention, the styrene elastomer contains an $\alpha$-methyl styrene • butadiene copolymer.

As the other preferable outer sole of the present invention, a convex stud portion is formed on the front face thereof.

According to other aspect of the present invention, shoes are provided. The shoes of the present invention are provided with any one of outer soles described above.

BRIEF DESCRIPTION OF THE DRAWINGS

Fig. 1 is a side view showing an embodiment of the shoes of the present invention.
Fig. 2 is an upper part-omitted longitudinal cross-sectional view cut by the I-I line (longitudinal direction) of Fig. 1.
Fig. 3 is a side view showing another embodiment of the shoes of the present invention.
Fig. 4 is an upper part-omitted longitudinal cross-sectional view showing another embodiment of the shoes of the present invention.

BEST MODE FOR CARRYING OUT THE INVENTION

An outer sole of the present invention is formed out of a polymer composition with a specific gravity of 0.95 or less which contains an olefin resin and a styrene elastomer. A storage elastic modulus [E'] and a loss coefficient [tan$\delta$] of the outer sole in a dynamic viscoelasticity measurement (20±3°C, 10 Hz) are 100 MPa to 500 MPa and 0.2 or less respectively, and a maximum tensile stress of the outer sole is 30 MPa or more.

The outer sole of the present invention is disposed on the bottom face of shoes. The outer sole is placed on the whole bottom face of shoes as well as on the partial bottom face of shoes. The outer sole is formed into optional shapes such as an approximately tabular shape, an approximately convex shape (for example, circular truncated cone), and a tabular shape with irregularities. The outer sole of the present invention may be fixedly mounted on shoes by adhesion as well as being removably mounted on shoes by a screw.

The outer sole of the present invention is specifically described hereinafter.

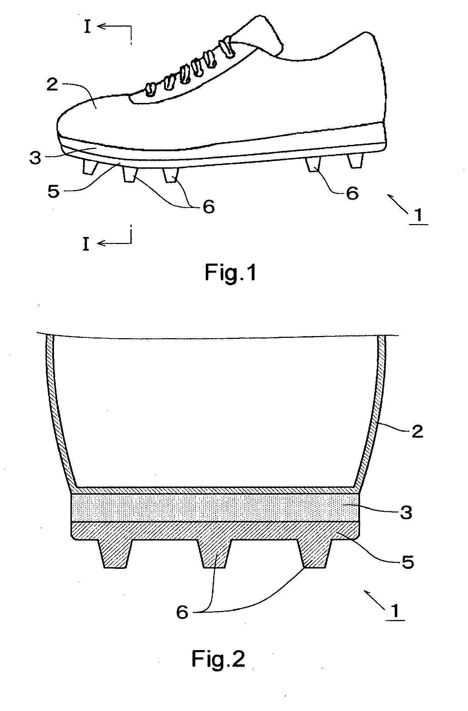

In Fig. 1 and Fig. 2, shoes 1 of the present invention is provided with a body 2, a midsole 3 placed on the bottom face of the body 2, and an outer sole 5 disposed on the bottom face of the midsole 3. The back face of the outer sole 5 is adhered to the midsole 3. When the above-mentioned shoes 1 is used, the front face of the outer sole 5 contacts with the ground.

Irregularities are formed on the front face of the outer sole 5. With regard to the outer sole 5 of the present invention, in an embodiment, a convex stud portion 6 is integrally formed on the front face of the outer sole 5. The size of this stud portion 6 is not particularly limited, and yet ordinarily approximately a diameter of 8 mm to 15 mm and a height of 5 mm to 20 mm. The number and location of the stud portion 6 are not particularly limited but may be optionally designed. The stud portion 6 is preferably placed by plurality in the front part and the rear part of the shoes (refer to Fig. 1).

However, the outer sole 5 of the present invention is not limited to an embodiment such that the front face thereof is formed into an irregular shape. With regard to the outer sole of the present invention, in another embodiment, the front face of the outer sole is formed into an approximately flat shape (not shown in Fig.).

In the present specification, "numerical value X to numerical value Y" signifies "numerical value X or more and numerical value Y or less". For example, the above-mentioned 8 mm to 15 mm signifies 8 mm or more and 15 mm or less.

In one embodiment, the outer sole 5 of the present invention is formed into approximately the same shape as the bottom face shape of the midsole 3. Such an outer sole 5 is adhered to the whole bottom face of the midsole 3, as shown in Fig. 1 and Fig. 2.

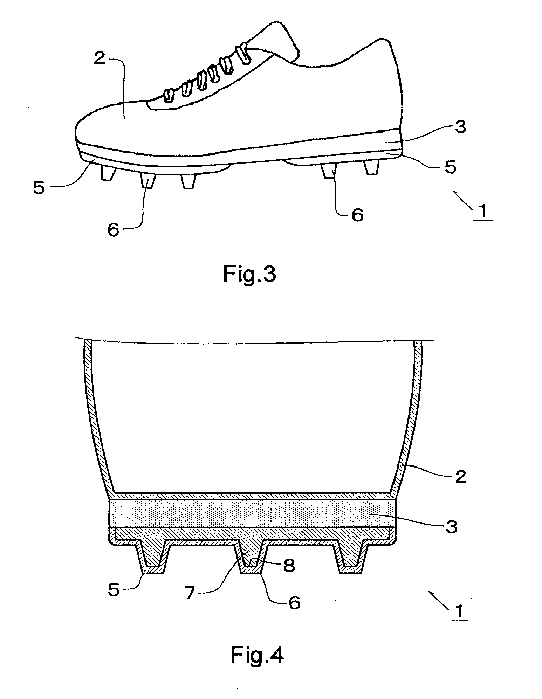

However, the outer sole 5 of the present invention is not limited to an embodiment such as to be formed into approximately the same shape as the bottom face shape of the midsole 3. In another embodiment, the outer sole 5 of the present invention is formed in a smaller area than the bottom face of the midsole 3. Such an outer sole 5 may be formed into approximately the same shape as the front part of the midsole 3, or approximately the same shape as the rear part of the midsole 3, such as shown in Fig. 3. In addition, the outer sole of the present invention may be partially placed in the heel part of the shoes.

The outer sole of the present invention is a bottom member of shoes contacting with the ground and may be properly used for the whole or partial shoes. The outer sole of the present invention is not limited to a bottom member ordinarily contacting with the ground. The outer sole of the present invention also includes a bottom member of the shoes, which does not contact with the ground ordinarily but may contact with the ground by deformation due to external force such as shock in landing. Examples of the bottom members of the shoes, which may contact with the ground by deformation due to external force, include a reinforcing member such as a shank member (a bottom member disposed in the arch of the foot). In addition, the outer sole of the present invention may be also used as an exchangeable stud member.

With regard to the outer sole 5 of the present invention, in one embodiment, a front face layer contacting with the ground and a back face layer adhered to the midsole are formed out of one polymer composition (refer to Fig. 2). The back face of such an outer sole 5 is formed into an approximately flat shape by reason of being favorably adhered to the bottom face of the midsole 3.

However, the outer sole 5 of the present invention is not limited to an embodiment such as to be shown in Fig. 2. In another embodiment, the outer sole 5 of the present invention is formed into a predetermined thickness to form a concave portion 8 corresponding to a convex shape of the stud portion 6 (refer to Fig. 4). With regard to such an outer sole 5, a filling layer 7 is placed on the back face side of the outer sole 5 including the concave portion 8. The back face of the filling layer 7 is adhered to the midsole 3, so that the outer sole 5 may be placed in the body 2. Examples of the forming materials for the filling layer 7 include various kinds of polymers such as a thermoplastic resin, a rubber, and an elastomer.

Ordinarily, the above-mentioned outer sole 5 is formed so as to have a thickness of 1 mm or more and preferably a thickness of 2 mm to 5 mm.

The above-mentioned outer sole 5 is formed out of a polymer composition with a specific gravity of 0.95 or less, containing an olefin resin and a styrene elastomer.

Examples of the above-mentioned olefin resin include a propylene polymer and an ethylene polymer. Examples of the propylene polymer include a polypropylene such as a homopolypropylene, a random polypropylene, a block polypropylene, an atactic polypropylene, a syndiotactic polypropylene, and a modified polypropylene such as a maleic anhydride thereof; and a propylene-α olefin copolymer. Examples of the ethylene polymer include a polyethylene such as a high-density polyethylene (HDPE), a medium-density polyethylene, a low-density polyethylene (LDPE), a linear low-density polyethylene (LLDPE), and an ultra-low-density polyethylene (ULDPE); an ethylene • α-olefin copolymer such as an ethylene • 1-butene copolymer, an ethylene • 1-hexene copolymer, an ethylene • 1-heptene copolymer, an ethylene • 1-octene copolymer, an ethylene • 4-methyl-1-pentene copolymer, an ethylene • 1-nonene copolymer, and an ethylene • 1-decene copolymer; and an ethylene copolymer such as an ethylene • vinyl acetate copolymer, an ethylene • acrylic acid copolymer, an ethylene • methacrylate copolymer, an ethylene • methacrylic acid copolymer, an ethylene • methacrylic ester copolymer, and a modified product such as a maleic anhydrides thereof. One kind of these compounds may be used singly or two kinds or more of them may be used in combination. The olefin resin of the present invention is preferably a mixture of the above-mentioned propylene polymer and the ethylene polymer, in particular, more preferably a mixture of the above-mentioned polypropylene and the polyethylene. The olefin resin containing a mixture of the propylene polymer and the ethylene polymer is small in a specific gravity and low in a melting viscosity during injection molding, so that hollows and warps are hardly caused in a molded product, which is advantageous in costs.

The above-mentioned propylene polymer and ethylene polymer may slightly contain other polymer components in a molecule without deteriorating the effect of the present invention.

The specific gravity of the above-mentioned propylene polymer is preferably small. The specific gravity of the propylene polymer is preferably 0.92 or less and more preferably 0.90 to 0.92.

Similarly, the specific gravity of the ethylene polymer is preferably small. The specific gravity of the ethylene polymer is preferably 0.96 or less and more preferably 0.85 to 0.94. Generally, the specific gravity of the high-density polyethylene is 0.92 to 0.96, the specific gravity of the low-density polyethylene is 0.91 to 0.92, the specific gravity of the linear low-density polyethylene is 0.94 or less, and the specific gravity of the ultra-low-density polyethylene is 0.90 or less.

The above-mentioned ethylene polymer is preferably the linear low-density polyethylene by reason of being small in a specific gravity and having heat resistance and strength, in particular, more preferably the linear low-density polyethylene produced by using a metallocene catalyst.

In the above-mentioned olefin resin, the blending ratio (mass ratio) of the ethylene polymer and the propylene polymer is not particularly limited but preferably 1:5 to 4:1, and more preferably 1:3 to 1:1. The reason therefor is that the blending ratio allows proper storage elastic modulus and rupture strength to be simultaneously satisfied.

Next, the above-mentioned styrene elastomer is structurally a polymer having a soft segment exhibiting rubber-like elasticity and a hard segment of a three-dimensional network. The styrene elastomer may be moulded by various kinds of molding methods such as injection molding by reason of exhibiting rubber-like elasticity at normal temperature and plasticizing at high temperature.

Examples of the above-mentioned styrene elastomer include a polymer such that a hard segment is a styrene polymer and a soft segment is a conjugated diene polymer. Examples of the styrene polymer include a polymer such as a styrene, an α-methyl styrene, an ortho-methyl styrene, a meta-methyl styrene, a para-methyl styrene, and a 1,3-dimethyl styrene. One kind of these styrene polymers may be used singly or two kinds or more of them may be used in combination.

Examples of the conjugated diene polymer include a polymer such as a 1,3-butadiene, a 1,2-butadiene, an isoprene, a 2,3-dimethyl-1,3-butadiene, a 1,3-pentadiene, a 1,3-hexadiene, and hydrogenated products thereof. One kind of these conjugated diene polymers may be used singly or two kinds or more of them may be used in combination. In the case where the conjugated diene polymer contains a hydrogenated product, the ratio of hydrogenation is not particularly limited, but 30% or more of carbon-carbon double bonds based on a conjugated diene unit are preferably hydrogenated, and 50% or more thereof are more preferably hydrogenated. Such a styrene elastomer containing a hydrogenated product is excellent in heat resistance and weather resistance.

The styrene polymer of the above-mentioned styrene elastomer is preferably an α-methyl styrene polymer. The number-average molecular weight of the α-methyl styrene polymer is not particularly limited, but preferably 1000 to 50000 and more preferably 2000 to 20000.

In the present specification, a "number-average molecular weight" is a molecular weight converted into polystyrene measured by a gel permeation chromatography (GPC) measurement.

The conjugated diene polymer of the above-mentioned styrene elastomer is preferably butadiene (or hydrogenated butadiene) polymer and/or isoprene polymer, and more preferably 1,3-butadiene (or hydrogenated 1,3-butadiene) polymer. The number-average molecular weight of the 1,3-butadiene (or hydrogenated 1,3-butadiene) is not particularly limited, but preferably 1000 to 400000 and more preferably 10000 to 100000. In the case where the above-mentioned conjugated diene polymer is a butadiene polymer, a butadiene polymer such that the content of 1,4 bonds of a conjugated diene unit composing the butadiene polymer is 20% or more is preferable. The content of 1,4 bonds is more preferably 30% to 90% and particularly preferably 35% to 80%. The reason therefor is that Tg in a soft segment is increased and elasticity of the styrene elastomer is decreased in the case where the content of 1,4 bonds is less than 20%.

Also, the above-mentioned styrene elastomer may contains a butadiene copolymer such that the content of 1,4 bonds of a conjugated diene unit is less than 30%.

The butadiene copolymer composing the styrene elastomer of the present invention is preferably a polymer, which includes a butadiene polymer such that the number-average molecular weight thereof is 500 to 10000 and the content of 1,4 bonds is less than 30% and a butadiene polymer such that the number-average molecular weight thereof is 1000 to 40000 and the content of 1,4 bonds is 20% or more.

The above-mentioned styrene elastomer is preferably a copolymer of α-methyl styrene and butadiene (or hydrogenated butadiene) and particularly preferably a copolymer of α-methyl styrene and 1,3-butadiene (or hydrogenated 1,3-butadiene). The coupling case of α-methyl styrene and butadiene may be linear, branched, radial, or optional combinations thereof. The copolymerization form of α-methyl styrene and butadiene may be random or tapered.

The styrene elastomer of the present invention is most preferably an α-methyl styrene • butadiene (or hydrogenated butadiene) • α-methyl styrene copolymer. An α-methyl styrene • butadiene (or hydrogenated butadiene)•α-methyl styrene copolymer is high in rupture strength and particularly high in rupture strength even at comparatively high temperature. An outer sole formed out of a polymer composition containing such a copolymer is excellent in abrasion resistance.

The number-average molecular weight of the above-mentioned styrene elastomer is not particularly limited, but preferably 200000 to 300000 and more preferably 30000 to 150000.

Also, the specific gravity of the above-mentioned styrene elastomer is about 0.90 to 0.94.

As the styrene elastomer, contents of an $\alpha$-methyl styrene polymer and a butadiene polymer are not particularly limited, but the styrene elastomer preferably includes 10 to 90% by mass of the $\alpha$-methyl styrene and 10 to 70% by mass of the butadiene polymer. More preferably, the styrene elastomer includes 20 to 50% by mass of the $\alpha$-methyl styrene and 40 to 70% by mass of the butadiene polymer. The styrene elastomer of such a content has proper rupture strength and elasticity.

The above-mentioned styrene elastomer may be copolymerized with other polymer components without deteriorating the effect of the present invention. Examples of the other polymers include a polymer composed of other monomers such as methyl methacrylate.

The above-mentioned styrene elastomer may have functional groups such as a carboxyl group, a hydroxyl group, an acid anhydride group, an amino group, and an epoxy group in a molecular chain or molecular ends without deteriorating the effect of the present invention.

The above-mentioned styrene elastomer may be produced by an anionic polymerization method, for example. Examples thereof include (1) a method such that conjugated diene is polymerized in tetrahydrofuran solvent by using a dianionic initiator to thereafter polymerize $\alpha$-methyl styrene sequentially under temperature conditions of -78°C and obtain an $\alpha$-methyl styrene • butadiene • $\alpha$-methyl styrene polymer, and (2) a method such that $\alpha$-methyl styrene with a concentration of 5 to 50% by mass is polymerized in nonpolar solvent by using an organic lithium compound as an initiator in the presence of a polar compound with a concentration of 0.1 to 10% by mass at a temperature of -30 to 30°C and the obtained living polymer is polymerized with conjugated diene to thereafter obtain an $\alpha$-methyl styrene•butadiene•$\alpha$-methyl styrene copolymer by adding a coupling agent.

The above-mentioned olefin resin and styrene elastomer are blended so as to obtain a polymer composition with a specific gravity of 0.95 or less. The olefin resin and styrene elastomer are blended such that the olefin resin is 40 to 60 parts by mass and the styrene elastomer is 40 to 60 parts by mass with respect to 100 parts by mass of total amount of the olefin resin and the styrene elastomer. According to such a blending amount, a polymer composition (outer sole), which has a specific gravity of 0.95 or less, a storage elastic modulus [E'] of 100 MPa to 500 MPa, a loss coefficient [tan$\delta$] of 0.2 or less, and a maximum tensile stress of 30 MPa or more respectively, can be obtained.

The polymer composition may contain other polymers (polymers other than the above-mentioned olefin resin and styrene elastomer) or other additives without deteriorating the effect of the present invention.

The blending ratios of the other polymers and/or the additives are not particularly limited, but generally more than 0 part by mass and 10 parts by mass or less with respect to 100 parts by mass of total amount of the olefin resin and the styrene elastomer.

Examples of the additives include a heat stabilizer, a light stabilizer, a lubricant, an antioxidant, a UV absorber, a flame retardant, a colorant, a plasticizer, an antistat, a thickener, and the like.

The above-mentioned polymer composition is a viscoelastic body, wherein a storage elastic modulus [E'] in a dynamic viscoelasticity measurement (20±3°C, 10 Hz) is 100 MPa to 500 MPa. When external force is applied by using an outer sole formed from a polymer composition, which has a storage elastic modulus [E'] of 100MPa to 500MPa, the outer sole allows shock to be absorbed by deforming appropriately. Therefore, a flaw is hardly occurred on the front face of the outer sole. Such an outer sole on which a flaw is hardly occurred is excellent in abrasion resistance. The storage elastic modulus [E'] of the polymer composition is preferably 300MPa to 500MPa. An outer sole formed form a polymer composition having a storage elastic modulus [E'] of 300MPa to 500MPa is excellent in abrasion resistance even at comparatively high temperature (for example, 50°C).

The polymer composition is a viscoelastic body, wherein a loss coefficient [tan$\delta$] in a dynamic viscoelasticity measurement (20±3°C, 10 Hz) is 0.2 or less. An outer sole formed form a polymer composition having a loss coefficient [tan$\delta$] of 0.2 or less is easily restored to the original shape when external force is applied in use. Therefore, occurrence of a flaw on the front face of the outer sole can be restrained. This function of restraining a flaw from occurring is a synergetic function between the loss coefficient [tan$\delta$] and the storage elastic modulus [E'] within the above specific range. Such an outer sole on which a flaw is hardly occurred is excellent in abrasion resistance. The polymer composition is preferably a viscoelastic body having a loss coefficient [tan$\delta$] of less than 0.12. An outer sole formed from a polymer composition having a loss coefficient [tan$\delta$] of less than 0.12 is excellent in abrasion resistance even at relatively high temperature (for example, 50°C).

The above-mentioned polymer composition has a maximum tensile stress of 30 MPa or more. As described above, a flaw is hardly occurred on the front face of the outer sole of the present invention in use, but occurring of the flaw cannot be prevented completely. Accordingly, the flaw is occurred on the outer sole depending on frequency in use, as a result a lump may be caused.

In view of this, an outer sole formed from a polymer composition having a maximum tensile stress of 30 MPa or more hardly causes rupture. Therefore, in the case where a lump is caused on the front face of the outer sole, the lump hardly falls off. By a synergetic function between the function of restraining a flaw from occurring and the function of falling off of the lump, the outer sole of the present invention is excellent in abrasion resistance. The polymer composition preferably has a maximum tensile stress of 40 MPa or more. An outer sole formed from a polymer composition having a maximum tensile stress of 40 MPa or more is excellent in abrasion resistance even at relatively high temperature (for example, 50°C).

The outer sole of the present invention is obtained by molding the polymer composition.

The molding method is not particularly limited but preferably injection molding. The injection temperature (nozzle portion) is about 200°C to 260°C.

The obtained outer sole is adhered to a main body of shoes by using a proper adhesive agent.

The use of shoes of the present invention is not particularly limited. The shoes of the present invention may be used for ball game shoes of various kinds such as soccer shoes and rugby shoes; running shoes such as jogging shoes and marathon shoes; shoes for track and field; shoes for general exercises; and beach shoes.

The outer sole of the present invention is light in weight and excellent in abrasion resistance. Therefore, the shoes of the present invention including the outer sole are preferably used for ball game shoes, running shoes, and shoes for track and field.

EXAMPLES

Hereinafter, the present invention is described in detail with reference to Examples and Comparative Examples.

[Materials used for Examples and Comparative Examples]

(1) Polyethylene (described as "PE" in Table 1 and the like) • • • linear low-density polyethylene. Product name "Evolue SP1521", manufactured by Prime Polymer Co., Ltd. Specific gravity of 0.91.

(2) Polypropylene (described as "PP" in Table 1 and the like) • • • random polypropylene. Product name "Primepolypro J721-GR", manufactured by Prime Polymer Co., Ltd. Specific gravity of 0.9.

(3) Polyurethane elastomer (described as "TPU" in Table 1 and the like) • • • elastomer such that a hard segment is polyurethane and a soft segment is polyether. Product name "Elastollan ET195", manufactured by BASF Japan Ltd.

(4) Polyester elastomer (described as "TPE" in Table 1 and the like) • • • elastomer such that a hard segment is polyester and a soft segment is polyether. Product name "Primalloy A1900N", manufactured by Mitsubishi Chemical Corporation.

(5) Polypropylene elastomer 1 (described as "TPP1" in Table 1 and the like) • • • elastomer such that a hard segment is polypropylene and a soft segment is ethylene • propylene rubber (EPDM). Product name "Prime TPO J5910", manufactured by Prime Polymer Co., Ltd.

(6) Polypropylene elastomer 2 (described as "TPP2" in Table 1 and the like) • • • elastomer such that a hard segment is polypropylene and a soft segment is ethylene • $\alpha$-olefin rubber. Product name "Thermorun M3855N", manufactured by Mitsubishi Chemical Corporation.

(7) Ionomer resin 1 (described as "IN1" in Table 1 and the like) • • • product name "HIMILAN 1555", manufactured by DUPONT-MITSUI POLYCHEMICALS CO., LTD.

(8) Ionomer resin 2 (described as "IN2" in Table 1 and the like) • • • product name "HIMILAN 1706", manufactured by DUPONT-MITSUI POLYCHEMICALS CO., LTD.

(9) Styrene • ethylene butadiene • styrene copolymer (described as "SEBS" in Table 1 and the like) • • • product name "Hybrar 7311", manufactured by KURARAY CO., LTD.

(10) Styrene • ethylene • propylene • styrene copolymer (described as "SEPS" in Table 1 and the like) • • • product name "Septon 1062", manufactured by KURARAY CO., LTD.

(11) $\alpha$-methyl styrene • butadiene • $\alpha$-methyl styrene copolymer (described as "$\alpha$SBS" in Table 1 and the like) • • • manufactured by KURARAY CO., LTD. The number-average molecular weight of the copolymer is 72000. The ratio of $\alpha$-methyl styrene polymer:butadiene polymer = 33:67. The number-average molecular weight of the $\alpha$-methyl styrene polymer is 6400. The number-average molecular weight of the butadiene polymer is 59000. The content of 1,4 bonds of the butadiene copolymer is 55%.

[Example 1]

PE, PP, and $\alpha$SBS were blended at the ratio shown in Table 1, sufficiently mixed by a mixer and thereafter kneaded by a twin-screw extruder (180 to 230°C) to prepare a polymer composition. The specific gravity of the polymer composition (20°C ± 3°C) is as shown in Table 1. In Table 1, the blending ratio of each material is denoted as part by mass.

The above-mentioned polymer composition was injected into a metallic mold by using an injection molding machine (maker: manufactured by Nissei Resin Industry Co., product name: FE160S type hydraulic injection molding machine, clamping force: 160 ton, screw diameter: 45 mm, injection speed: 21 cm$^3$/s, injection pressure: 60 MPa: injection temperature (nozzle portion): 230°C) to produce a sample for physical tests and a sample for abrasion tests.

The above-mentioned sample for physical tests was used for the measurement of specific gravity, the measurement of dynamic viscoelasticity, and the measurement of tensile strength. The sample for physical tests was formed into a tabular shape with a thickness of 2 mm, a width of 50 mm and a length of 100 mm.

The above-mentioned sample for abrasion tests was used for the following abrasion resistance tests. The sample for abrasion tests was molded into a tabular shape with a thickness of 8 mm, a width of 20 mm, and a length of 20 mm, which was thereafter stamped out by a steel cutting die with a diameter of 16 mm and formed into a disk shape with a diameter of 16 mm and a thickness of 8 mm.

[table 1]

| | PE | PP | TPU | TPE | TPP1 | TPP2 | IN1 | IN2 | SEBS | SEPS | α SBS | Specific Gravity |
|---|---|---|---|---|---|---|---|---|---|---|---|---|
| Example1 | 40 | 10 | | | | | | | | | 50 | 0.92 |
| Example2 | 10 | 45 | | | | | | | | | 45 | 0.91 |
| Example3 | 10 | 30 | | | | | | | | | 60 | 0.92 |
| Example4 | 30 | 30 | | | | | | | | | 40 | 0.92 |
| Example5 | 25 | 25 | | | | | | | | | 50 | 0.91 |
| Comparative Example1 | | 50 | | | | | | | 50 | | | 0.91 |
| Comparative Example2 | | 50 | | | | | | | | 50 | | 0.92 |
| Comparative Example3 | | 50 | | | | | | | 20 | | 30 | 0.91 |
| Comparative Example4 | 50 | | | | | | | | | | 50 | 0.91 |
| Comparative Example5 | 50 | 50 | | | | | | | | | | 0.91 |
| Comparative Example6 | 25 | 75 | | | | | | | | | | 0.91 |
| Comparative Example7 | 75 | 25 | | | | | | | | | | 0.90 |
| Comparative Example8 | | | | | 100 | | | | | | | 0.95 |
| Comparative Example9 | | | | | | 100 | | | | | | 0.94 |
| Comparative Example 10 | | | | | | | 100 | | | | | 0.95 |
| Comparative Example 11 | | | | | | | | 100 | | | | 0.95 |
| Comparative Example12 | 30 | 40 | | | | | | | | | 30 | 0.92 |
| Comparative Example 13 | 15 | 15 | | | | | | | | 20 | 50 | 0.91 |
| Comparative Example14 | | | 100 | | | | | | | | | 1.21 |
| Comparative Example15 | | | | 100 | | | | | | | | 1.11 |

[table 2]

|  | E' (MPa) | tanδ | TB (MPa) | DIN abrasion (23°C) | DIN abrasion (50°C) |
|---|---|---|---|---|---|
| Example1 | 144 | 0.12 | 38 | 71 | 92 |
| Example2 | 489 | 0.09 | 46 | 72 | 81 |
| Example3 | 317 | 0.11 | 42 | 73 | 80 |
| Example4 | 280 | 0.13 | 41 | 76 | 97 |
| Example5 | 219 | 0.18 | 36 | 96 | 109 |
| Comparative Example1 | 182 | 0.23 | 18 | 220 | - |
| Comparative Example2 | 337 | 0.12 | 17 | 160 | - |
| Comparative Example3 | 389 | 0.22 | 32 | 111 | - |
| Comparative Example4 | 97 | 0.15 | 29 | 121 | - |
| Comparative Example5 | 523 | 0.15 | 27 | 101 | 121 |
| Comparative Example6 | 820 | 0.11 | 30 | 106 | 122 |
| Comparative Example7 | 340 | 0.19 | 21 | 145 | 171 |
| Comparative Example8 | 698 | 0.16 | 21 | 112 | - |
| Comparative Example9 | 106 | 0.13 | 12 | 150 | - |
| Comparative Example10 | 456 | 0.09 | 23 | 110 | - |
| Comparative Example11 | 538 | 0.06 | 33 | 101 | - |
| Comparative Example12 | 169 | 0.09 | 26 | 131 | - |
| Comparative Example13 | 66 | 0.14 | 17 | 163 | - |
| Comparative Example14 | 137 | 0.18 | 45 | 52 | 58 |
| Comparative Example15 | 84 | 0.05 | 15 | 121 | 142 |

[Examples 2 to 5]

A sample for physical tests and a sample for abrasion tests were produced in the same manner as the above-mentioned Example 1 except for blending PE, PP, and αSBS at the ratio shown in Table 1. The specific gravity of each polymer composition (20°C±3°C) of Examples 2 to 5 is as shown in Table 1.

[Comparative Examples 1 to 15]

A sample for physical tests and a sample for abrasion tests were produced in the same manner as the above-mentioned Example 1 except for blending each material at the ratio shown in Table 1. The specific gravity of each polymer composition (20°C±3°C) of Comparative Examples 1 to 15 is as shown in Table 1.

[Measuring method of specific gravity]

The specific gravity was measured in conformity to JIS K 7311 (underwater substitution method).

The specific gravity was measured for each sample (a length of 10±3 mm, a width of 10±3 mm and a thickness of 2±0.5 mm) at a measured temperature of 20±3°C by using an electronic densitometer (product name: MD-200S) manufactured by ALFA MIRAGE CO., LTD.

In the underwater substitution method, the specific gravity (D) was calculated by the following expression from a weight in air (W1) and a weight in water (W2).

$$\text{Expression; } D = W1/(W1\text{-}W2)$$

[Measurement of dynamic viscoelasticity]

The storage elastic modulus [E'] and loss coefficient [tanδ] were calculated by measuring a dynamic viscoelasticity for each test sample of the above-mentioned Examples and Comparative Examples on the following conditions in conformity to JIS K 7244. The results are shown in Table 2. Measuring instrument: viscoelasticity measuring apparatus Rheogel-E4000, manufactured by UBM.
Sample shape: strip shape with a length of 33±3 mm, a width of 5±0.3 mm, and a thickness of 2±0.3 mm
Measurement mode: tensile mode with sine wave strain
Distance between chucks: 20±0.2 mm
Temperature: 20±3°C
Frequency: 10 Hz
Load: automatic static load
Dynamic strain: 3 to 5 μm

[Measuring method of tensile strength]

The maximum tensile stress [TB] was measured for each test sample of the above-mentioned Examples and Comparative Examples on the following conditions in conformity to JIS K 6251. The results are shown in Table 2.
Measuring instrument: product name "Autograph AG-IS type universal tester", manufactured by Shimadzu Corporation
Load cell: 5kN, manufactured by Shimadzu Corporation
Elongation measuring instrument: product name "video type noncontact extensometer DVE-201", manufactured by Shimadzu Corporation
Tension speed: 300 mm/min
Distance between chucks: 40 mm
Distance between bench marks: 10 mm
Sample shape: dumb-bell No. 5 (minimum width of 5 mm)
Maximum stress [TB] calculation method: calculated by dividing the maximum test force by the initial cross-sectional area before the tests.

[Abrasion resistance tests at a temperature of 23°C]

The abrasion resistance of the sample for abrasion tests of the above-mentioned Examples and Comparative Examples was investigated by using a DIN abrasion tester (product name "DIN abrasion tester GT-7012-D", manufactured by GOTECH TESTING MACHINES) in conformity to JIS K 6264-2.
This DIN abrasion tester is a tester such that a drum with a diameter of 150 mm and a width of 460 mm, on whose front face abrasive paper #60 is wound, is rotated at a speed of 0.32 m/sec and the sample for abrasion tests is pressed and abraded against the abrasive paper of this drum at a load of 10 N.
The preparatory abrasion was first performed for smoothing an abrasive surface on the occasion of the tests. With regard to the preparatory abrasion, the pressing of the sample for abrasion tests against the drum was performed by 20 m under an atmosphere of 23°C. Thereafter, the weight of the sample for abrasion tests after this preparatory abrasion was measured to perform the final tests. With regard to the final tests, the pressing of the sample after the preparatory abrasion against the drum was performed by 40 m to thereafter measure the weight. The difference between the weight before the final tests and the weight after the final tests was measured (this difference is called abrasion weight). In order to remove the influence of wasting state of the abrasive paper, the abrasion weight of standard rubber was also measured in the same procedure as described above.
Herein, when the abrasion weight of standard rubber, the abrasion weight of the sample for abrasion tests, and the specific gravity of the sample for abrasion tests are regarded as W1, W2, and S, respectively, the abrasion volume A ($mm^3$) of each sample for abrasion tests is calculated from the following expression. The abrasion volume ($mm^3$) of the Examples and Comparative Examples at a temperature of 23°C is shown in Table 2. Expression; A= (W2×200)/(W1×S)

[Abrasion resistance tests at a temperature of 50°C]

The abrasion volume A ($mm^3$) of each sample for abrasion tests at a temperature of 50°C was calculated in the same manner as the above-mentioned [Abrasion resistance tests at a temperature of 23°C] except for performing under an atmosphere of 50°C.
Results thereof are shown together in Table 2.
However, with regard to Comparative Examples 1 to 4 and Comparative Examples 8 to 13, the DIN abrasion test at a temperature of 50°C was omitted for the following reason.

(a) Comparative Examples 1 to 4 and Comparative Examples 8 to 13 are materials including the same olefin materials as Examples 1 to 5 and other Comparative Examples. (b) The degree of change in the abrasion volume (abrasion volume at 23°C/abrasion volume at 50°C) in Examples 1 to 5 and other Comparative Examples is in the same tendency, that is, approximately 0.8. It is presumed from the above-mentioned reasons of (a) and (b) that abrasion resistance of Comparative Examples 1 to 4 and Comparative Examples 8 to 13 at a temperature of 50°C shows the same tendency as Examples 1 to 5 and the like.

[Evaluations]

The outer soles of Examples 1 to 5 are excellent in abrasion resistance as is clarified from Table 2. In particular, the outer soles of Examples 2 and 3 are excellent in abrasion resistance also at a temperature of 50°C. The front face of the outer sole contacting with the ground reaches approximately 40°C to 60°C in using shoes. Thus, the outer sole excellent in abrasion resistance also at a temperature of 50°C as Examples 2 and 3 is particularly preferable.

On the other hand, it is understood that Comparative Examples 1 and 3 large in a loss coefficient (the loss coefficient is more than 0.2) are inferior in abrasion resistance.

It is understood that Comparative Examples 1, 2, 4, 5, 7 to 10, 12, and 13 small in a tensile strength (the tensile strength is less than 30 MPa) are inferior in abrasion resistance.

It is understood that Comparative Examples 4 and 13 small in a storage elastic modulus (the storage elastic modulus is less than 100 MPa) are inferior in abrasion resistance.

In contrast, it is understood that Comparative Examples 5, 6, 8 and 11 large in a storage elastic modulus (the storage elastic modulus is more than 500 MPa) are inferior in abrasion resistance.

Comparative Examples 14 and 15 are so high in a specific gravity as compared with Examples 1 to 5 that weight reduction requested in the present invention is not satisfied.

INDUSTRIAL APPLICABILITY

The outer sole of the present invention can be utilized as a bottom member of shoes. In particular, the outer sole of the present invention is appropriate as a bottom member of sports shoes.

**Claims**

1. An outer sole being disposed on the bottom face of shoes, comprising:

   a polymer composition with a specific gravity of 0.95 or less which contains an olefin resin and a styrene elastomer;
   wherein the specific gravity is measured in accordance with JIS K 7311,
   wherein a storage elastic modulus [E'] and a loss coefficient [tan$\delta$] in a dynamic viscoelasticity measurement (20±3°C, 10 Hz) are 100 MPa to 500 MPa and 0.2 or less respectively,
   wherein the storage elastic modulus and the loss coefficient are measured in accordance with JIS K 7244, and a maximum tensile stress is 30 MPa or more,
   wherein the maximum tensile stress is measured in accordance with JIS K 6251.

2. The outer sole of shoes according to claim 1, wherein the olefin resin and the styrene elastomer are blended by 40 parts by mass to 60 parts by mass and 40 parts by mass to 60 parts by mass respectively with respect to 100 parts by mass of a total amount of the olefin resin and the styrene elastomer.

3. The outer sole of shoes according to claim 1 or 2, wherein the olefin resin contains a mixture of an ethylene polymer and a propylene polymer.

4. The outer sole of shoes according to claim 3, wherein the blending ratio (mass ratio) of the ethylene polymer and the propylene polymer is 1:5 to 4:1.

5. The outer sole of shoes according to any one of claims 1 to 4, wherein the styrene elastomer contains an $\alpha$-methyl styrene·butadiene copolymer.

**6.** The outer sole of shoes according to any one of claims 1 to 5, wherein a convex stud portion is formed on the front face.

**7.** Shoes being provided with the outer sole according to any one of claims 1 to 6.

**Patentansprüche**

**1.** Außensohle, die an der Unterseite von Schuhen angeordnet ist, umfassend:

eine Polymerzusammensetzung mit einer relativen Dichte von 0,95 oder weniger, welche ein Olefinharz und ein Styrolelastomer enthält;
wobei die relative Dichte gemäß JIS K 7311 gemessen wird,
wobei ein Speicherelastizitätsmodul [E'] und ein Verlustkoeffizient [tanδ] in einer dynamischen Viskoelastizitätsmessung (20 ± 3 °C, 10 Hz) 100 MPa bis 500 MPa bzw. 0,2 oder weniger betragen,
wobei der Speicherelastizitätsmodul und der Verlustkoeffizient gemäß JIS K 7244 gemessen werden und eine maximale Zugspannung 30 MPa oder mehr beträgt,
wobei die maximale Zugspannung gemäß JIS K 6251 gemessen wird.

**2.** Außensohle von Schuhen nach Anspruch 1, wobei das Olefinharz und das Styrolelastomer in einer Menge von 40 Massenteilen bis 60 Massenteilen bzw. 40 Massenteilen bis 60 Massenteilen, bezogen auf 100 Massenteile einer Gesamtmenge des Olefinharzes und des Styrolelastomers, vermischt werden.

**3.** Außensohle von Schuhen nach Anspruch 1 oder 2, wobei das Olefinharz eine Mischung aus einem Ethylenpolymer und einem Propylenpolymer enthält.

**4.** Außensohle von Schuhen nach Anspruch 3, wobei das Mischungsverhältnis (Massenverhältnis) des Ethylenpolymers und des Propylenpolymers 1:5 bis 4:1 beträgt.

**5.** Außensohle von Schuhen nach einem der Ansprüche 1 bis 4, wobei das Styrolelastomer ein α-Methylstyrol•Butadien-Copolymer enthält.

**6.** Außensohle von Schuhen nach einem der Ansprüche 1 bis 5, wobei ein konvexer Stollenteil an der Vorderseite gebildet ist.

**7.** Schuhe, die mit der Außensohle nach einem der Ansprüche 1 bis 6 versehen sind.

**Revendications**

**1.** Semelle externe disposée sur la face inférieure de chaussures, comprenant :

une composition polymère présentant une densité relative inférieure ou égale à 0,95 et contentant une résine d'oléfine et un élastomère de styrène ;
dans laquelle la densité relative est mesurée conformément à la norme JIS K 7311,
dans laquelle un module élastique de conservation [E'] et un facteur de perte [tan δ] dans une mesure de viscoélasticité dynamique (20 ± 3 °C, 10 Hz) sont respectivement de 100 MPa à 500 MPa et inférieur ou égal à 0,2,
dans laquelle le module élastique de conservation et le facteur de perte sont mesurés conformément à la norme JIS K 7244, et la contrainte de traction maximale est supérieure ou égale à 30 MPa,
dans laquelle la contrainte de traction maximale est mesurée conformément à la norme JIS K 6251.

**2.** Semelle externe de chaussures selon la revendication 1, dans laquelle la résine d'oléfine et l'élastomère de styrène sont mélangés à raison respectivement de 40 parties en masse à 60 parties en masse et de 40 parties en masse à 60 parties en masse par rapport à 100 parties en masse d'une quantité totale de résine d'oléfine et d'élastomère de styrène.

**3.** Semelle externe de chaussures selon la revendication 1 ou 2, dans laquelle la résine d'oléfine contient un mélange d'un polymère d'éthylène et d'un polymère de propylène.

**4.** Semelle externe de chaussures selon la revendication 3, dans laquelle le rapport de mélange (massique) du polymère d'éthylène et du polymère de propylène est compris entre 1:5 et 4:1.

**5.** Semelle externe de chaussures selon l'une quelconque des revendications 1 à 4, dans laquelle l'élastomère de styrène contient un copolymère $\alpha$-méthyl styrène•butadiène.

**6.** Semelle externe de chaussures selon l'une quelconque des revendications 1 à 5, dans laquelle une partie de crampon convexe est formée sur la face avant.

**7.** Chaussures pourvues d'une semelle externe selon l'une quelconque des revendications 1 à 6.

Fig.1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11266905 A

- JP 2007029320 A